# EUROPÄISCHE PATENTANMELDUNG

(11) **EP 1 001 322 A2**
(43) Veröffentlichungstag der Anmeldung: **17.05.2000**
(21) Anmeldenummer: 99122779.4
(22) Anmeldetag: 16.11.1999
(51) Int. Cl.: G05B 19/042, G05B 19/418

(54) **Aufbereitungsvorrichtung für den medizinischen Bereich und Verfahren zur Steuerung derselben**

(30) Priorität: 16.11.1998 DE 19852792
(71) Anmelder: MMM MÜNCHENER MEDIZIN MECHANIK GMBH, 82152 Planegg (DE)
(72) Erfinder: Eifler, Peter, Dr.-Ing., 80336 München (DE); Ehrich, Axel, Dipl.-Ing., 81541 München (DE); Näther, Torsten, Dipl.-Ing., 82152 Krailling (DE)
(74) Vertreter: Grünecker, Kinkeldey, Stockmair & Schwanhäusser Anwaltssozietät

(57) **Zusammenfassung**

Die Erfindung betrifft eine Aufbereitungsvorrichtung für den medizinischen oder pharmazeutischen Bereich sowie ein Verfahren zur Steuerung einer Aufbereitungsvorrichtung. Die Aufbereitungsvorrichtung zeichnet sich aus durch eine Steuereinrichtung zur Ansteuerung und/oder Überwachung der Komponenten der Aufbereitungsvorrichtung sowie durch eine Schnittstelleneinrichtung zur Schaffung einer Datenverbindung zwischen der Steuereinrichtung und wenigstens einer von der Steuereinrichtung separaten, externen Datenverarbeitungseinrichtung. Seitens der Aufbereitungsvorrichtung ist erfindungsgemäß ein Datenträger vorgesehen, auf welchem ein gerätespezifischer Kennungs-, Konfigurations- oder Programmdatensatz gespeichert ist, der von der Datenverarbeitungseinrichtung lesbar ist, zur Konfiguration oder Einrichtung eines auf der Datenverarbeitungseinrichtung lauffähigen Kommunikationsprogrammes zum Datenaustausch zwischen der Datenverarbeitungseinrichtung und der Steuereinrichtung. Durch die erfindungsgemäß ausgestattete Aufbereitungsvorrichtung sowie durch das vorgeschlagene Verfahren zur Steuerung einer Aufbereitungsvorrichtung wird es möglich, die Aufbereitungsvorrichtung über einen externen Rechner, beispielsweise über ein hausseitiges Datennetzwerk anzusprechen.

## Beschreibung

Die Erfindung betrifft eine Aufbereitungsvorrichtung für den medizinischen Bereich sowie ein Verfahren zur Steuerung derselben. Entsprechende Aufbereitungsanlagen finden beispielsweise im Krankenhausbereich als Reinigungsanlagen, Trocknungsanlagen, Desinfektionsanlagen oder auch als Sterilisatoren Anwendung. Die Erfindung betrifft ferner die Einbindung von Geräten zur Aufbereitung medizinischer Güter in einen Gesamtverbund.

Diese Aufbereitungsvorrichtungen werden üblicherweise als weitgehend vormontierte Baueinheiten angeliefert und aufgestellt. Zur Steuerung der in diesen Aufbereitungsvorrichtungen verbauten Einrichtungen wie beispielsweise Pumpen, Sensoren, Ventile, Schrittmotoren und dergleichen ist in einem vorzugsweise gut zugänglichen Bereich ein Schaltkasten angeordnet, in welchem eine Steuereinheit vorgesehen ist. Diese Steuereinheit ist über entsprechende Verkabelungen mit einer üblicherweise an der Gerätevorderseite angeordneten Eingabekonsole verbunden. Über diese Eingabekonsole kann die Aufbereitungsvorrichtung unter Auswahl eines geeigneten Behandlungsverfahrens bzw. unter Einstellung gewünschter Verfahrensparameter in Betrieb genommen werden. Werden mehrere Aufbereitungsvorrichtungen zu einem Aufbereitungssystem, das beispielsweise eine Heiß-Waschanlage, eine Trocknungsanlage und einen Sterilisator umfaßt, zusammengestellt, ist es möglich, die einzelnen Aufbereitungsanlagen von einer zentralen Steuerkonsole aus zu betätigen. Hierzu werden die Steuereinheiten der jeweiligen Aufbereitungsvorrichtungen mit der zentralen Eingabekonsole verkabelt.

Die Verkabelung der einzelnen Steuereinheiten mit der zentralen Eingabekonsole erweist sich jedoch insbesondere beim Ausbau eines bestehenden Systems als problematisch. Die Anpassung der bestehenden Eingabekonsole an das erweiterte System ist mit einem hohen Arbeitsaufwand verbunden und im allgemeinen nur von hochqualifizierten Fachkräften durchführbar.

Unter dem Eindruck dieses Problems liegt der Erfindung die Aufgabe zugrunde, eine Aufbereitungsvorrichtung für den medizinischen Bereich sowie ein Verfahren zur Steuerung derselben zu schaffen, durch welche bzw. durch welches die Ansteuerung und Überwachung der Aufbereitungsvorrichtungen erleichtert und eine höhere Flexibilität für einen späteren Systemausbau sowie bessere Überwachung des Materialflusses gegeben ist.

Diese Aufgabe wird erfindungsgemäß durch eine Aufbereitungsvorrichtung gemäß Patentanspruch 1 bzw. durch das in Patentanspruch 11 angegebene Verfahren zur Steuerung einer Aufbereitungsvorrichtung gelöst.

Dadurch wird es auf vorteilhafte Weise möglich, die zentrale Ansteuerung der jeweiligen Aufbereitungsvorrichtung von einer externen, d.h. von der Aufbereitungsvorrichtung getrennten Rechnereinrichtung aus vorzunehmen, wobei die jeweils erforderliche Konfiguration der mit der Aufbereitungsvorrichtung in Dialog tretenden Rechnereinrichtung auf Grundlage eines beispielsweise herstellerseitig in der entsprechenden Aufbereitungsvorrichtung lokal implementierten Programmpaketes bzw. Datensatzes erfolgt. Die Aufbereitungsvorrichtung kann dadurch in vorteilhafter Weise unmittelbar an ein hausseitig vorgesehenes Datennetz angeschlossen werden, und kann mit einer oder mehreren ebenfalls an das Netzwerk angeschlossenen Datenverarbeitungseinrichtungen kommunizieren, wobei der Kommunikationsstandard auf Grundlage des seitens der Aufbereitungsvorrichtung lokal implementierten Datensatzes oder Programmpaketes festgelegt wird. Die bislang erforderliche, aufwendige Verkabelung der Aufbereitungsvorrichtung mit den separaten, zur Ansteuerung der Aufbereitungsvorrichtung vorgesehenen Eingabegeräten kann auf vorteilhafte Weise auf eine einzige Datenleitung reduziert werden. Die Konfiguration der mit der jeweiligen Aufbereitungsvorrichtung in Datenverbindung tretenden Datenverarbeitungseinrichtung kann programmgesteuert auf einfache Weise ohne besondere Programmier-Kenntnisse erfolgen.

Zur Speicherung des in der jeweiligen Aufbereitungsvorrichtung lokal implementierten Datensatzes bzw. Programmpaketes ist in vorteilhafter Weise ein Datenträger in Form eines Fest- und/oder eines flüchtigen Speichers vorgesehen. Auf einem derartigen Datenspeicher kann neben dem gesamten, zur Steuerung der Aufbereitungsvorrichtung erforderlichen Steuerungsprogramm auch ein zur Schaffung einer Benutzeroberfläche auf der externen Datenverarbeitungseinrichtung erforderliches Kommunikationsprogramm gespeichert sein. Der in der jeweiligen Aufbereitungsvorrichtung lokal implementierte Datensatz kann über ein seitens der Aufbereitungsvorrichtung vorgesehenes Interface verändert werden. Der lokal in der Aufbereitungsvorrichtung implementierte Datensatz kann durch ein in einer Steuereinrichtung der Aufbereitungsvorrichtung abgearbeitetes Auto-Konfigurationsprogramm, das die momentane Konfiguration der Aufbereitungsvorrichtung überprüft, automatisch verändert werden. Die zur Bedienung der Aufbereitungsvorrichtung vorgesehene Datenverarbeitungseinrichtung ist vorzugsweise durch einen separat von der Aufbereitungseinrichtung aufgestellten Computer gebildet. Ein derartiger Computer kann beispielsweis ein unter Betriebssystemen OS2, UNIX, WINDOWS 9.X, WINDOWS NT bzw. weiteren internet-fähigen Betriebssystemen, LINUX oder MS-DOS betriebener Industrie-Standardrechner sein.

Die Aufbereitungsvorrichtung kann mit einer oder mit mehreren externen Datenverarbeitungseinrichtungen und weiteren Aufbereitungsanlagen verbunden sein. Dadurch besteht weiterhin die Möglichkeit, Abläufe, beispielsweise eine Dampfbezugssteuerung, auch zwischen den Aufbereitungsanlagen ohne externe Bedienung zu steuern. Ferner wird es möglich, ein durch mehrere ggf. unterschiedliche Aufbereitungsvorrichtungen zusammengestelltes Aufbereitungssystem von mehreren Arbeitsplätzen aus zu steuern und zu überwachen. So ist es beispielsweise möglich, von einer Datenverarbeitungseinrichtung aus den Betrieb der einzelnen Aufbereitungsvorrichtungen zu koordinieren und von einer weiteren, beispielsweise über ein Netzwerk mit den jeweiligen Aufbereitungsvorrichtungen verbundenen weiteren Datenverarbeitungseinrichtung die jeweiligen Sterilgutaufbereitungsabläufe aufzuzeichnen und zu dokumentieren. Hierzu ist es beispielsweise möglich, an die jeweilige Aufbereitungsvorrichtung eine vorzugsweise in Form eines Handscanners ausgebildete Leseeinrichtung anzuschließen, über welche das jeweils in die Aufbereitungsvorrichtung verbrachte Sterilgut erfaßt werden kann. Hierdurch wird es möglich, den Weg des Sterilgutes durch ein aus mehreren Aufbereitungsvorrichtungen zusammengestelltes System zu verfolgen.

Eine mit Blick auf eine Verkürzung der Dialog-Aufnahmezeit zwischen der Datenverarbeitungseinrichtung und der Aufbereitungsvorrichtung vorteilhafte Ausführungsform der Erfindung ist dadurch gegeben, daß eine Basis-Benutzeroberfläche des Kommunikationsprogrammes auf der Datenverarbeitungseinrichtung der Aufbereitungsanlage vorinstalliert ist. Dadurch wird es auf vorteilhafte Weise möglich, die Belastung eines zum Datenaustausch zwischen der Aufbereitungsvorrichtung und der externen Datenverarbeitungseinrichtung vorgesehenen Netzwerkes zu verringern. Es ist möglich, die Vorinstallation der auf der Datenverarbeitungseinrichtung lauffähigen Basis-Benutzerober-fläche anhand eines Programmpaketes vorzunehmen, das ebenfalls in dem seitens der Aufbereitungsvorrichtung vorgesehenen Datenträger gespeichert ist, und das nur bei der erstmaligen Dialogaufnahme zwischen der Datenverarbeitungseinrichtung und der Steuereinrichtung der Aufbereitungsvorrichtung installiert wird. Durch den seitens der Aufbereitungsvorrichtung gespeicherten Datensatz, insbesondere das Programmpaket, wird im Rahmen einer Dialogaufnahme zwischen der Datenverarbeitungseinrichtung und der Aufbereitungsvorrichtung vorzugsweise zunächst eine Kompatibilitätsprüfung vorgenommen. Auf Grundlage des Ergebnisses dieser Kompatibilitätsprüfung kann nachfolgend ein Versionsabgleich erfolgen.

Die Datenverarbeitungseinrichtung umfaßt vorzugsweise eine Datenausgabeeinrichtung, beispielsweise in Form eines Bildschirms sowie insbesondere eines Druckers. Der Bildschirm kann beispielsweise als Farb-LCD-Display ausgebildet sein, wodurch eine besonders übersichtliche Bedienung und Steuerung der jeweils angewählten Aufbereitungsvorrichtung ermöglicht wird. Zur Bedienung der Aufbereitungsvorrichtung über die genannte Datenverarbeitungseinrichtung ist an die Datenverarbeitungseinrichtung eine Eingabeeinrichtung, beispielsweise in Form eines Tastenfeldes, angeschlossen. Gemäß einer besonders bevorzugten Ausführungsform der Erfindung ist diese Eingabeeinrichtung in Form eines Touch-Screen-Bildschirms ausgebildet.

Die Datenverbindung zwischen der Aufbereitungsvorrichtung und der Datenverarbeitungseinrichtung kann durch ein hausseitig vorgesehenes lokales Netzwerk (LAN) geschaffen werden. An ein derartiges lokales Netzwerk können mehrere Aufbereitungsvorrichtungen angeschlossen werden und sind von mehreren, ebenfalls an das Netzwerk angeschlossenen, zugangsberechtigten Datenverarbeitungseinrichtungen ansteuerbar, wobei die Kommunikation zwischen der Datenverarbeitungseinrichtung und der angesteuerten Aufbereitungsvorrichtung durch ein lokal in der Aufbereitungsvorrichtung implementiertes Programmpaket gesteuert wird. Gemäß einer besonders bevorzugten Ausführungsform des erfindungsgemäßen Verfahrens veranlaßt der seitens der Aufbereitungsvorrichtung lokal gespeicherte Konfigurations- oder Programmdatensatz die Installation des Kommunikationsprogrammes aus einem vorbereiteten, der Datenverarbeitungseinrichtung durch einen Datenträger, beispielsweise einer CD, zugeführten Datensatz.

Eine besonders hohe Flexibilität hinsichtlich Änderungen der Ansteuerung der jeweiligen Aufbereitungsvorrichtung kann in vorteilhafter Weise dadurch erreicht werden, daß im Rahmen des Dialogs zwischen der geräteseitig vorgesehenen Steuereinrichtung und der Datenverarbeitungseinrichtung ein Steuerungsprogramm auf die geräteseitige Steuereinrichtung übertragen wird. Dieses Geräte-Steuerungsprogramm kann beispielsweise über die genannten Datenverarbeitungseinrichtung dem jeweiligen Anwendungsfall entsprechend individuell angepaßt werden. Die Anpassung dieses Steuerungsprogrammes kann beispielsweise menü-geführt erfolgen. Das zur Generierung des auf die Aufbereitungsvorrichtung zu übertragenden Steuerungsprogramm erforderliche Programmpaket wird gemäß einer bevorzugten Ausführungsform des erfindungsgemäßen Verfahrens aus dem seitens der Aufbereitungsvorrichtung vorgesehenen Datenträger gelesen.

Gemäß einer weiteren bevorzugten Ausführungsform des Verfahrens wird im Zuge des Anschlusses der Gerätesteuerung an die Datenverarbeitungseinrichtung auf der Datenverarbeitungseinrichtung eine gerätespezifische Benutzeroberfläche auf Grundlage des seitens der Aufbereitungsvorrichtung gespeicherten Datensatzes eingerichtet. Hierdurch wird es möglich, die Erweiterung eines beispielsweise in einem Krankenhaus bestehenden Aufbereitungssystem in besonders einfacher Weise vorzunehmen. Um auch Veränderungen des Systems durch Entfernung vorhandener Aufbereitungsanlagen besser Rechnung tragen zu können, wird gemäß einer weiteren bevorzugten Ausführungsform der Erfindung die auf der Datenverarbeitungseinrichtung gebildete gerätespezifische Benutzeroberfläche unterdrückt, sobald die Aufbereitungsvorrichtung von dem Netzwerk getrennt wird oder nicht ansprechbar ist. Im Rahmen einer derartigen Trennung der Aufbereitungsvorrichtung aus dem bestehenden System erfolgt in vorteilhafter Weise eine automatische Deinstallation der seitens der Datenverarbeitungseinrichtung installierten Programmkomponenten.

Gemäß einer weiteren bevorzugten Ausführungsform des erfindungsgemäßen Verfahrens wird im Rahmen eines seitens der Datenverarbeitungseinrichtung durchgeführten Update-Vorganges der jeweilige gerätespezifische Datensatz der einzelnen Aufbereitungsvorrichtungen erneut eingelesen.

Der gerätespezifische Kennungs-, Konfigurations- oder Programmdatensatz wird vorzugsweise bei jeder Kontaktaufnahme zwischen der Steuereinrichtung und der Datenverarbeitungseinrichtung zumindest abschnittsweise erneut eingelesen. Dadurch wird es möglich, Änderungen der Gerätekonfiguration der einzelnen Aufbereitungsvorrichtungen umgehend zu erfassen. Der gerätespezifische Kennungs-, Konfigurations- oder Programmdatensatz kann durch ein seitens der Steuereinrichtung abgearbeitetes Konfigurationsprogramm ständig aktualisiert werden. Hierzu veranlaßt die geräteseitige Steuereinrichtung gemäß einer bevorzugten Ausführungsform des Verfahrens im Rahmen vorbestimmter Zeitintervalle oder beispielsweise bei jeder Neuinbetriebnahme der Aufbereitungsvorrichtung eine Abfrage der momentanen Gerätekonfiguration. Der momentane Gerätekonfigurationsdatensatz wird insbesondere beim Anschließen einer Leseeinrichtung an die Aufbereitungsvorrichtung automatisch geändert. Das auf der Datenverarbeitungseinrichtung laufende Kommunikationsprogramm wird bei einer derartigen Systemänderung, beispielsweise um ein Sterilguterfassungsprogramm erweitert, über welches die von der Leseeinrichtung eingelesenen Daten beispielsweise an einen ebenfalls an das Netzwerk angeschlossenen Lagerverwaltungsrechner weitergeleitet werden können.

Weitere Einzelheiten und Merkmale der Erfindung ergeben sich aus der nachfolgenden Beschreibung eines bevorzugten Ausführungsbeispiels in Verbindung mit der Zeichnung. Es zeigen:
- Fig. 1: eine Schema-Darstellung eines Systems zur Aufbereitung von Sterilgut in einem Krankenhaus mit mehreren Aufbereitungsvorrichtungen und mehreren mit diesen einzelnen Aufbereitungsvorrichtungen in Datenverbindung stehenden Rechnersystemen,
- Fig. 2: eine Schema-Darstellung zur Erläuterung weiterer Einzelheitn des Systems nach Fig. 1, und
- Fig. 3: eine Schema-Darstellung zur Erläuterung des internen Aufbaus einer erfindungsgemäßen Aufbereitungsvorrichtung.

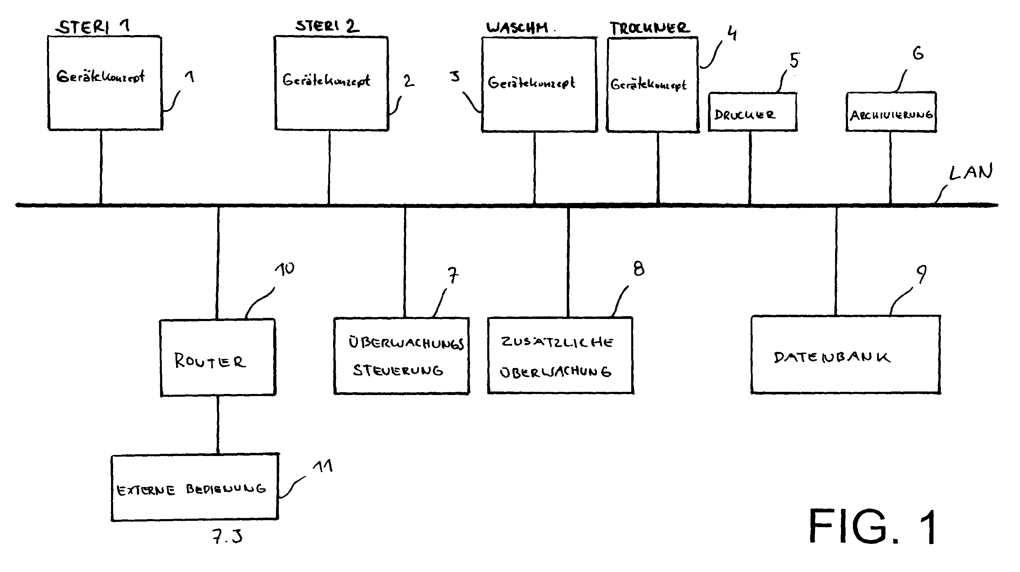

Das in Fig. 1 dargestellte System zur Aufbereitung von Sterilgut umfaßt einen Sterilisator 1, einen weiteren Sterilisator 2, eine Waschmaschine 3 und einen Trockner 4. Die genannten Geräte sind an ein lokales Netzwerk LAN angeschlossen. Über dieses lokale Netzwerk LAN können zwischen den genannten Aufbereitungsanlagen 1, 2, 3 und 4 Daten ausgetauscht werden. An dieses lokale Netzwerk LAN sind weiterhin angeschlossen ein Drucker 5, eine Archivierungseinrichtung 6, eine Überwachungssteuerung 7 sowie eine weitere Steuerungseinrichtung 8 zur zusätzlichen Überwachung der Aufbereitungsgeräte 1, 2, 3 und 4.

Des weiteren sind an das lokale Netzwerk eine Datenbank 9 sowie ein Router 10 angeschlossen, der einen Zugang zu dem lokalen Netzwerk LAN über externe Rechnereinrichtungen 11 ermöglicht.

Die genannten Systemkomponenten 1 bis 11 können über das lokale Netzwerk LAN miteinander kommunizieren.

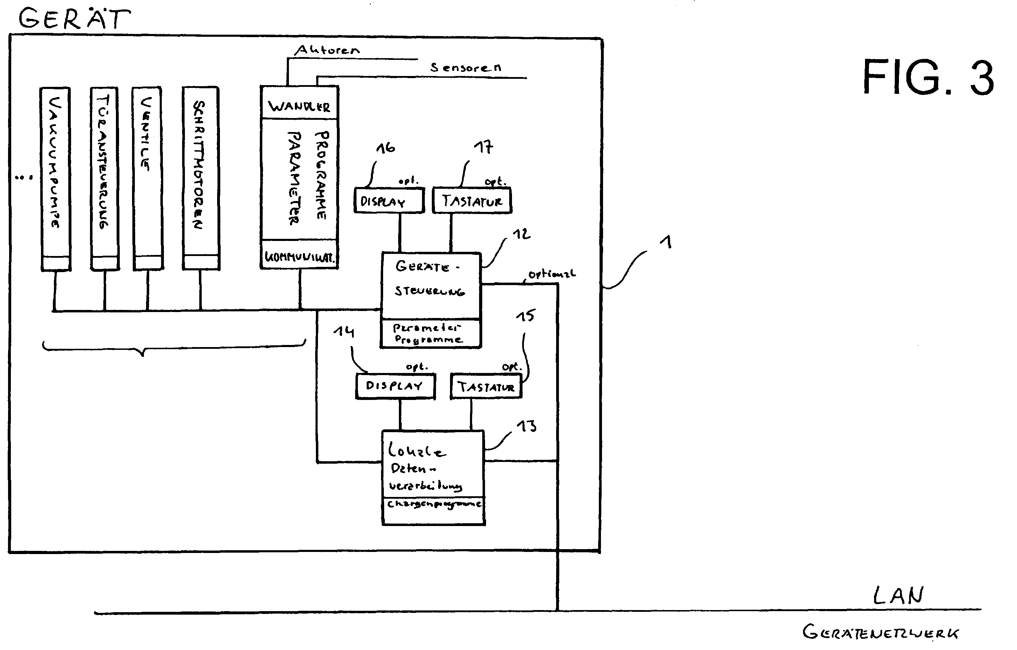

Insbesondere die Sterilisatoren 1 und 2 sind mit einer später unter Bezugnahme auf Fig.3 noch im einzelnen erläuterten Steuereinrichtung 12 versehen, über welche die einzelnen Funktionskomponenten der jeweiligen Aufbereitungsvorrichtung sowie der Datenaustausch zwischen der Steuereinrichtung und einer weiteren Aufbereitungsvorrichtung oder einem an das lokale Netzwerk LAN angeschlossenen Rechnersystem gesteuert wird.

Jede der Aufbereitungsvorrichtungen 1 bis 4 ist mit einer Speichereinrichtung versehen, auf welcher lokal die zur Steuerung und Überwachung der jeweiligen Aufbereitungsvorrichtung erforderlichen Programmpakete lokal implementiert sind. Diese Programmpakete können von externen Bedienungs- oder Steuerungseinheiten sowie ggf. weiteren angeschlossenen Datenverarbeitungseinrichtungen abgerufen werden. Die genannten externen Geräte können die erforderlichen Programmpakete von den angeschlossenen Aufbereitungsvorrichtungen lesen.

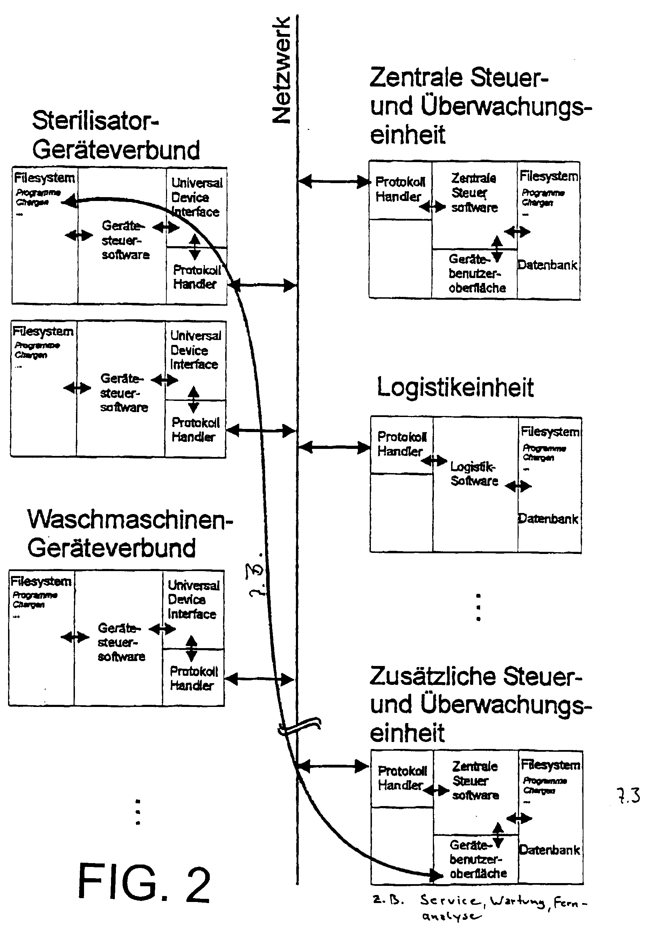

Wie aus der Darstellung gemäß Fig.2 hervorgeht, ist jede Aufbereitungsvorrichtung mit einer lokalen Datenverarbeitungseinrichtung versehen, in welcher die zur Steuerung der Aufbereitungsvorrichtung erforderlichen Programmpakete gespeichert sind. Diese auf der entsprechenden Aufbereitungsvorrichtung, beispielsweise einem Sterilisator, gespeicherten Programmpakete können von einer an das Netzwerk angeschlossenen zusätzlichen Steuerungs- und Überwachungseinheit zumindest teilweise eingelesen werden, wodurch auf der genannten zusätzlichen Steuer- und Überwachungseinheit eine Gerätebenutzeroberfläche erzeugt wird, über die ein standardisierter Datenaustausch, insbesondere Steuerdatenaustausch, mit dem angesprochenen Sterilisator ermöglicht wird. Diese zusätzliche Steuer- und Überwachungseinheit kann beispielsweise über eine Datenfernübertragungseinrichtung, insbesondere über eine Internet-Verbindung mit dem lokalen Netzwerk LAN in Verbindung treten. Hierdurch wird es möglich, bestimmte Steuerungs-, Überwachungs- und Prüfvorgänge eines Systems zur Steuerung der Aufbereitung von Sterilgut von einer externen Service-Zentrale durchzuführen. Bei dem in Fig.2 gezeigten System umfassen jeder Sterilisator eines Sterilisatorgeräteverbundes und jede Waschmaschine eines Waschinengeräteverbundes, eine zentrale Steuer- und Überwachungseinheit sowie eine Logistikeinheit jeweils eine Datenverarbeitungseinrichtung, auf welcher bestimmte Programmpakete gespeichert sind, die über das angeschlossene Netzwerk gelesen werden können. Diese lokal gespeicherten Programmpakete können ggf. beispielsweise durch die genannte zusätzliche Steuer- und Überwachungseinheit modifiziert werden.

Der Aufbau eines erfindungsgemäß ausgestalteten Sterilisators wird nachfolgend unter Bezugnahme auf Fig.3 beschrieben. Der gezeigte Sterilisator umfaßt die bereits genannte Steuereinrichtung 12 zur Steuerung des internen Funktionsablaufes des Sterilisators sowie eine lokale Datenverarbeitungseinrichtung 13. Die lokale Datenverarbeitungseinrichtung und/oder die Steuereinrichtung 12 sind an eine hausseitig vorgesehene Datenleitung LAN angeschlossen. Auf der in der Aufbereitungsvorrichtung bzw. dem Sterilisator 1 vorgesehenen lokalen Datenverarbeitungseinrichtung 13 sind mehrere Programmpakete gespeichert, die über das genannte lokale Netzwerk LAN gelesen werden können. Die derart lokal in der jeweiligen Aufbereitungsvorrichtung implementierten Programmpakete können über ein optional vorgesehenes Display 14 sichtbar gemacht werden. Es ist auch möglich, die lokal implementierten Programmpakete über eine optional vorgesehene Tastatur 15 zu modifizieren. Das Display 14 und die Tastatur 15 können nach entsprechender Bearbeitung des lokal implementierten Programmpaketes von der lokalen Datenverarbeitungseinrichtung 13 getrennt werden, so daß ein Zugriff auf die lokal implementierten Programmpakete nur über das lokale Netzwerk LAN oder durch die Steuereinrichtung 12 bei entsprechender Zugangsberechtigung möglich ist.

Der hier gezeigte Sterilisator 1 zeichnet sich hinsichtlich seines internen Aufbaus dadurch aus, daß die Ansteuerung mehrerer Funktionskomponenten des Sterilisators durch ein Bus-System erfolgt. Bei dem gezeigten Sterilisator kann beispielsweise die zur Ansteuerung der Schrittmotoren, der Ventile, einer Türansteuerung und einer Vakuumpumpe vorgesehenen Schaltkreise ein Bus-System mit der Steuereinrichtung 12 des Sterilisators 1 verbunden sein. Auch die in dem Sterilisator 1 vorgesehenen Sensoren und ggf. weitere Aktoren sind über eine zwischengeschaltete Datenverarbeitungseinrichtung mit der Steuereinrichtung 12 verbunden. Über diese zwischengeschaltete Datenverarbeitungseinrichtung können die von den Sensoren erzeugten Meßsignale unter Berücksichtigung vorbestimmter Verarbeitungsprozeduren vorverarbeitet und in einer standardisierten Form der Gerätesteuerung zugeführt werden. Dadurch wird es möglich, etwaige Änderungen des Meßwertaufnahmeverhaltens der genannten Sensoren ggf. vorab zu kompensieren. An die Steuereinrichtung 12 kann ebenfalls optional ein Display 16 oder eine Eingabeeinrichtung, beispielsweise in Form einer Tastatur 17, angeschlossen werden.

Werden mehrere Sterilisatoren 1 mit dem vorbeschriebenen Aufbau, beispielsweise über das lokale Netzwerk LAN miteinander gekoppelt, so wird es möglich, den Betrieb der Sterilisatoren derart aufeinander abzustimmen, daß beispielsweise eine möglichst gleichmäßige Belastung einer hausseitigen Dampfversorgung erreicht wird. Auch wird es möglich, den Betrieb der einzelnen Organe der Aufbereitungsvorrichtungen aufeinander abzustimmen, so daß eine gleichmäßigere Belastung der hausseitigen Spannungsversorgung erreicht wird. Insbesondere kann eine gleichzeitige Inbetriebnahme der Vakuumpumpen vermieden werden. Die zu einer derartigen wirtschaftlichen Betriebsweise der einzelnen Aufbereitungsvorrichtungen vorbereiteten Programmpakete werden bzw. sind auf den lokalen Datenverarbeitungseinrichtungen der jeweiligen Aufbereitungsvorrichtungen gespeichert. Durch diese lokal implementierten Programmpakete kann die der jeweiligen momentanen Systemnutzung entsprechende günstigste Ansteuerung der einzelnen Aufbereitungsvorrichtungen automatisch festgelegt werden. Der Datenaustausch zwischen den einzelnen Aufbereitungsvorrichtungen, insbesondere zwischen mehreren Sterilisatoren, kann über die in Fig.2 gezeigte zusätzliche Steuer- und Überwachungseinheit von einem externen Rechnersystem, beispielsweise von einer herstellerseitigen Servicezentrale, überwacht und ggf. beeinflußt werden.

Die bei dem Sterilisator gemäß Fig.3 durch die Steuereinrichtung 12 über ein Bus-System angesteuerten funktionalen Gruppen (Schrittmotore, Ventile, Türansteuerung, Vakuumpumpe...) sind in besonders vorteilhafter Weise ebenfalls mit lokalen Datenverarbeitungseinrichtungen und lokal implementierten Vearbeitungsprogrammen ausgestattet sein. Der Betriebszustand der entsprechend angesteuerten Komponenten kann in vorteilhafter Weise über das genannte lokale Netzwerk LAN abgefragt werden.

Durch die derartige Ansteuerung bestimmter Funktionsgruppen des Sterilisators über ein Bus-System und eine der jeweiligen funktionalen Gruppe zugeordnete Datenverarbeitungseinrichtung wird insgesamt ein modularer Aufbau des Sterilisators 1 erreicht. Hierdurch wird der Wartungs- und Instandsetzungsaufwand des Sterilisators verringert, da die betroffenen Module auf einfache Weise ausgetauscht werden können, wobei die jeweilige Anpassung an die ggf. veränderte Gesamtgerätekonfiguration vollautomatisch programmgesteuert erfolgen kann. Vorzugsweise ist jedes Einzelmodul des Sterilisators mit einer Datenverarbeitungseinrichtung versehen, die die Adaption des Einzelmodules an die Steuereinrichtung 12 des Sterilisators 1 unterstützt. Aufgrund des innerhalb jedes Sterilisators durch die Steuereinrichtung 12 standardisierten Datenaustausches läßt sich der erfindungsgemäße Sterilisator unter verschiedensten Benutzeroberflächen von externen Steuer- und Überwachungseinheiten betreiben und überwachen.

Die Software der Aufbereitungsanlage besteht aus mehreren Komponenten, die für sich allein lauffähig sind und wiederum über definierte Schnittstellen mit den anderen Komponenten kommunizieren. Eine wichtige Komponente in einem solchen Gerät ist die Benutzeroberfläche, mit der der Bediener Einfluß auf den Programmablauf nehmen kann. Um eine einfache Anpassung der Gerätebedienung an einen veränderten Softwarestandard zu ermöglichen, wird die Benutzeroberfläche als Programmcodepaket von der jeweiligen Aufbereitungsanlage an eine externe Datenverarbeitungseinrichtung, beispielsweise eine Zentraleinheit, geschickt, die diesen Code ausführen kann. Damit wird erreicht, daß die Zentraleinheit das entsprechende Aufbereitungsgerät immer über eine geeignete Benutzeroberfläche ansteuert.

In jedem Aufbereitungsgerät ist erfindungsgemäß eine Schnittstelle implementiert (Universal Device Interface UDI), welche die Kommunikation zwischen den Geräten standardisiert. Dieses Interface stellt einheitliche Funktionen bereit, um an Informationen zum Betriebszustand der Aufbereitungsanlage zu gelangen. Hierzu zählen insbesondere auch Informationen über den Gerätestatus, auf dem Gerät installierte Komponenten und Versionen, gespeicherte Chargen und verfahrenstechnische Programme. Die Funktionen der Schnittstelle werden als eigenständige Programme verwirklicht, die die Anpassung der Schnittstelle an die Gerätesoftwareversion übernehmen.

Das in Fig.1 dargestellte System zur Aufbereitung von Sterilgut umfaßt eine Reinigungsanlage 3, eine Trocknungsanlage 4 und zwei Sterilisatoren 1.

In der Reinigungsanlage 3 sind mehrere, durch eine Steuereinheit 12 angesteuerte Funktionskompomenten vorgesehen.

Hierbei handelt es sich beispielsweise um eine Brauchwasserpumpe, eine Ventilanordnung und eine Transporteinrichtung.

Die Trocknungsanlage 4 umfaßt ebenfalls eine Steuereinheit zur Ansteuerung mehrerer Gebläse.

Der Sterilisator 1 umfaßt eine Sterilisatorsteuereinheit 12 zur Ansteuerung einer Ventilanordnung, einer Manteldruckregelungseinrichtung, einer Ablaßventilanordnung und einer Vakuumpumpe sowie zur Erfassung der Behandlungsparameter durch ein Prozeßmedium über mehrere Meßwertaufnehmer.

Die Reinigungsanlage3, die Trocknungsanlage 4 und der Sterilisator 1 sind an eine Datenleitung LAN angeschlossen. An diese Datenleitung ist eine Datenverarbeitungseinrichtung 7 angeschlossen, die hier durch einen Industrie-Standard-Computer gebildet ist. Über die Datenleitung können die Steuereinheiten der Aufbereitungsanlagen 1, 2, 3 und 4 mit der Datenverarbeitungseinrichtung 7 und ggf. auch untereinander in Verbindung treten. In jeder Aufbereitungsvorrichtung sind Datenträger vorgesehen. Auf diesen Datenträgern sind lokal Programmpakete abgespeichert.

Jedes Programmpaket umfaßt vorzugsweise mehrere Unterprogramme sowie ein Konfigurationsprogramm.

Im Rahmen einer Dialogaufnahme zwischen der Datenverarbeitungseinrichtung und einer ausgewählten Aufbereitungsvorrichtung erfolgt ein nach Maßgabe des Konfigurationsprogrammes gesteuerter Datenaustausch zwischen der jeweiligen Steuereinheit und der Datenverarbeitungseinrichtung. Im Rahmen dieser Dialogaufnahme erfolgt eine Kompatibilitätsprüfung sowie die Abstimmung eines Kommunikationsstandards. Anschließend wird das in dem Datenträger gespeicherte Unterprogramm auf die Datenverarbeitungseinrichtung übertragen. Das Unterprogramm schafft auf der Datenverarbeitungseinrichtung eine Standard-Benutzeroberfläche. Anschließend werden vorrichtungsspezifische Unterprogramme an die Datenverarbeitungseinrichtung übertragen. Auf Grundlage dieser vorrichtungsspezifischen Unterprogramme wird auf der Datenverarbeitungseinrichtung eine dem speziellen Typ der Aufbereitungsvorrichtung Rechnung tragende Benutzeroberfläche erzeugt. Anhand eines seitens der Datenverarbeitungseinrichtung nunmehr ausführbaren Unterprogrammes kann ein Steuerprogramm zur Steuerung des Betriebs der Aufbereitungsvorrichtung erzeugt werden. Dieses Steuerungsprogramm wird von der Datenverarbeitungseinrichtung in die Steuereinheit der entsprechenden Aufbereitungsvorrichtung übertragen zur Steuerung der einzelnen Funktionskomponenten der Aufbereitungsvorrichtung.

An die Datenleitung LAN können mehrere Datenverarbeitungseinrichtungen 7,8,9,10 angeschlossen sein. Über diese ggf. mehrfach vorgesehenen Datenverarbeitungseinrichtungen kann ggf. parallel auf ein und dieselbe Aufbereitungsvorrichtung zugegriffen werden. So ist es beispielsweise möglich, über eine Datenverarbeitungseinrichtung 7 die Steuerung der Aufbereitungsvorrichtung 1, 2, 3, 4 vorzunehmen und über eine weitere, ebenfalls gleichzeitig auf die entsprechende Aufbereitungsvorrichtung zugreifende Datenverarbeitungseinrichtung eine Aufzeichnung der Prozeßparameter vorzunehmen. Durch eine entsprechende, seitens der geräteseitigen Steuereinrichtung vorgenommene Prioritätenfestsetzung wird verhindert, daß über mehrere angeschlossene Datenverarbeitungseinrichtungen in unzulässiger Weise in den Steuerungsablauf eingegriffen wird.

Neben der Reinigungsanlage 3, der Trocknungsanlage 4 und den Sterilisatoren 1 und 2 können noch weitere, zur Sterilguthandhabung geeignete Einrichtungen an die Datenleitung LAN bzw. an die Datenverarbeitungseinrichtung 7 angeschlossen sein. Beispielsweise ist es möglich, an die Datenleitung eine Leseeinrichtung, z.B. in Form eines Handscanners, anzuschließen. Der Anschluß der Leseeinrichtung an die Datenleitung LAN erfolgt vorzugsweise unter Zwischenschaltung einer Anschlußvorrichtung, die eine Steuereinheit und einen Datenträger umfaßt, auf welchem ein Programmpaket gespeichert ist, das ein Lagerverwaltungsprogramm umfaßt, so daß die durch die Leseeinrichtung eingelesenen Sterilgutchargen als Lager-Eingänge bzw. als Lagerausgänge verbucht werden können. Das Lagerverwaltungsprogramm kann nach Anschluß der Anschlußvorrichtung an die Datenleitung bzw. die Datenverarbeitungseinrichtung auf die Datenverarbeitungseinrichtung übertragen werden zur Ausführung des Lagerverwaltungsprogrammes in der Datenverarbeitungseinrichtung.

Bei der gezeigten bevorzugten Ausführungsform eines erfindungsgemäßen Systems zur Sterilgutaufbereitung sind die jeweiligen Systemkomponenten, hier die Reinigungsanlage 3, die Trocknungsanlage 4, die Sterilisatoren 1 und 2 und die Anschlußvorrichtung jeweils mit Programmpaketen ausgestattet, die in einer im jeweiligen Gerät angeordneten Speichereinrichtung gespeichert sind. Diese Programmpakete können auf die Datenverarbeitungseinrichtung übertragen werden und sind auf dieser externen Datenverarbeitungseinrichtung selbständig lauffähig. Die Abarbeitung dieser Programmpakete in der separaten Datenverarbeitungseinrichtung erlaubt eine Anzeige, die Bedienung und die Kommunikation mit der jeweils angesprochenen Aufbereitungsvorrichtung.

Die Erfindung ist nicht auf das vorangehend beschriebene Ausführungsbeispiel beschränkt. Beispielsweise ist es auch möglich, anstelle der gezeigten Datenleitung LAN, die Teil eines Netzwerkes bildet, die Steuereinheiten der einzelnen Aufbereitungsvorrichtungen unmittelbar an eine entsprechende Schnittstelle der externen Datenverarbeitungseinrichtung anzuschließen.

## Patentansprüche

1. Aufbereitungsvorrichtung für den medizinischen oder pharmazeutischen Bereich mit einer Steuereinrichtung zur Ansteuerung und/oder Überwachung der Komponenten der Aufbereitungsvorrichtung und einer Schnittstelleneinrichtung zur Schaffung einer Datenverbindung zwischen der Steuereinrichtung und wenigstens einer von der Steuereinrichtung separaten Datenverarbeitungseinrichtung, wobei seitens der Aufbereitungsvorrichtung ein Datenträger vorgesehen ist, auf weichem ein gerätespezifischer Kennungs-, Konfigurations- oder Programmdatensatz gespeichert ist, der von der Datenverarbeitungseinrichtung lesbar ist, zur Konfiguration oder Einrichtung eines auf der Datenverarbeitungseinrichtung lauffähigen Kommunikationsprogramms zum Datenaustausch zwischen der Datenverarbeitungseinrichtung und der Steuereinrichtung.

2. Aufbereitungsvorrichtung nach Anspruch 1, **dadurch gekennzeichnet,** daß der Datenträger ein Festspeicher, nicht flüchtiger Speicher für Datenparameter ist.

3. Aufbereitungsvorrichtung nach Anspruch 1 oder 2, **dadurch gekennzeichnet,** daß die Datenverarbeitungseinrichtung durch einen separat von der Aufbereitungseinrichtung angeordneten Computer gebildet ist.

4. Aufbereitungsvorrichtung nach einem der Ansprüche 1 bis 3, **dadurch gekennzeichnet,** daß die Aufbereitungsvorrichtung mit mehreren externen Datenverarbeitungseinrichtungen verbunden ist.

5. Aufbereitungsvorrichtung nach wenigstens einem der Ansprüche 1 bis 4, **dadurch gekennzeichnet,** daß das gesamte zum Datenaustausch vorgesehene Kommunikationsprogramm auf dem seitens der Aufbereitungsvorrichtung vorgesehenen Datenträger gespeichert ist.

6. Aufbereitungsvorrichtung nach wenigstens einem der Ansprüche 1 bis 4, **dadurch gekennzeichnet,** daß eine Basisbenutzeroberfläche des Kommunikationsprogrammes auf der Datenverarbeitungseinrichtung vorinstalliert ist.

7. Aufbereitungsvorrichtung nach wenigstens einem der Ansprüche 1 bis 6, **dadurch gekennzeichnet,** daß im Rahmen einer Dialog-Aufnahme zwischen der Datenverarbeitungseinrichtung und der Aufbereitungsvorrichtung eine Kompatibilitätsprüfung erfolgt.

8. Aufbereitungsvorrichtung nach wenigstens einem der Ansprüche 1 bis 7, **dadurch gekennzeichnet,** daß im Rahmen der Dialogaufnahme zwischen der Datenverarbeitungseinrichtung und der Aufbereitungsvorrichtung ein Kommunikationsstandard bestimmt wird.

9. Aufbereitungsvorrichtung nach wenigstens einem der Ansprüche 1 bis 8, **dadurch gekennzeichnet,** daß die Datenverarbeitungseinrichtung eine Datenausgabeeinrichtung in Form eines Bildschirms, insbesondere eines LCD-Displays, umfaßt.

10. Aufbereitungsvorrichtung nach wenigstens einem der Ansprüche 1 bis 9, **dadurch gekennzeichnet,** daß die Datenverarbeitungseinrichtung eine Eingabeeinrichtung in Form eines Tastenfeldes oder eines Touch-Screen-Bildschirms aufweist.

11. Verfahren zur Steuerung einer Aufbereitungsvorrichtung mittels einer seitens der Aufbereitungsvorrichtung vorgesehenen Gerätesteuereinrichtung und einer externen Datenverarbeitungseinrichtung, die mit der Geräte-Steuereinrichtung verbindbar ist, bei welchem im Rahmen einer Dialog-Aufnahme zwischen der Datenverarbeitungseinrichtung und der Gerätesteuereinrichtung ein seitens der Aufbereitungsvorrichtung gespeicherter Kennungs-, Konfigurations- oder Programmdatensatz in die Datenverarbeitungseinrichtung eingelesen wird, zur Konfiguration oder Installation eines auf der Datenverarbeitungseinrichtung lauffähigen gerätesteuerungs-spezifischen Kommunikationsprogrammes zum Datenaustausch zwischen der Datenverabeitungseinrichtung und der Gerätesteuereinrichtung.

12. Verfahren nach Anspruch 11, **dadurch gekennzeichnet,** daß der seitens der Aufbereitungsvorrichtung gespeicherte Konfigurations- oder Programmdatensatz die Installation des Kommunikationsprogrammes aus einem vorbereiteten, der Datenverarbeitungseinrichtung beispielsweise durch einen Datenträger zugeführten Datensatz steuert.

13. Verfahren nach Anspruch 11 oder 12, **dadurch gekennzeichnet,** daß im Rahmen des Dialogs zwischen der Geräte-Steuereinrichtung und der Datenverarbeitungseinrichtung ein Steuerungsprogramm auf die Geräte-Steuereinrichtung übertragen wird.

14. Verfahren nach wenigstens einem der Ansprüche 11 bis 13, **dadurch gekennzeichnet,** daß mit dem Anschluß der Gerätesteuerung an die Datenverarbeitungseinrichtung auf der Datenverarbeitungseinrichtung eine gerätespezifische Benutzeroberfläche auf Grundlage des vorrichtungsseitig gespeicherten Datensatzes eingerichtet wird.

15. Verfahren nach wenigstens einem der Ansprüche 11 bis 14, **dadurch gekennzeichnet,** daß bei Trennung der Verbindung zwischen der Geräte-Steuereinrichtung und der Datenverarbeitungseinrichtung die gerätespezifische Benutzeroberfläche unterdrückt wird.

16. Verfahren nach Anspruch 15, **dadurch gekennzeichnet,** daß nach Trennung der Verbindung zwischen der Geräte-Steuereinrichtung und der Datenverarbeitungseinrichtung eine Deinstallation der seitens der Datenverarbeitungseinrichtung installierten Programmkomponenten erfolgt.

17. Verfahren nach wenigstens einem der Ansprüche 11 bis 16, **dadurch gekennzeichnet,** daß im Rahmen eines seitens der Datenverarbeitungseinrichtung durchgeführten Update-Vorganges der gerätespezifische Datensatz erneut eingelesen wird.

18. Verfahren nach wenigstens einem der Ansprüche 11 bis 17, **dadurch gekennzeichnet,** daß der gerätespezifische Kennungs-, Konfigurations- oder Programmdatensatz durch Änderung der Gerätekonfiguration der Aufbereitungsvorrichtung automatisch geändert wird.

19. Verfahren nach wenigstens einem der Ansprüche 11 bis 18, **dadurch gekennzeichnet,** daß der gerätespezifische Datensatz durch die geräteseitige Steuereinrichtung unter Abfrage der momentanen Gerätekonfiguration erzeugt wird.

20. Verfahren nach einem der Ansprüche 11 bis 19, **dadurch gekennzeichnet,** daß der gerätespezifische Datensatz beim Anschließen einer Leseeinrichtung an die Aufbereitungsvorrichtung automatisch geändert wird.
